# EUROPEAN PATENT APPLICATION

(11) **EP 3 882 842 A1**
(43) Date of publication of application: **22.09.2021**
(21) Application number: 21162235.2
(22) Date of filing: 12.03.2021
(51) Int. Cl.: G06Q 30/00, G06Q 10/08

(54) **METHOD FOR ENCRYPTING AND VERIFYING INTEGRITY OF A MERCHANDISE**

(30) Priority: 16.03.2020 CN 202010179801
(71) Applicant: KeKeQiHuo (Shenzhen) Technologies Co., Ltd., Shenzhen, Guangdong (CN)
(72) Inventor: ZU, Keke, 16955 Solna (SE)
(74) Representative: Proi World Intellectual Property GmbH

(57) **Abstract**

A method for encrypting and verifying the integrity of a merchandise uses the merchandise detail information and its sequence to encrypt and verify the integrity of the merchandise. A sender selects the detail information and its sequence in advance as a key for the integrity encryption. After the merchandise is received, the receiver provides the corresponding detail information and its sequence according to the platform display and/or prompts. Further, the platform performs the comparison based on the corresponding two sets of detail information to determine whether the merchandise integrity verification is passed.

## Description

### Field of Invention/Keywords

The invention relates to the technical field of Internet information, in particular to a method for encrypting and verifying the integrity of a merchandise.

### Background of Invention

After a good is sold, the seller generally provides the buyer with free return and exchange services. This leaves room of low-cost arbitrage for malicious buyers. In practice, malicious buyers often return fakes and exchange fakes for authentic goods. That is, the malicious buyer first buys a genuine merchandise from the merchant, and then uses the merchant's free return and exchange service to return the counterfeit merchandise to the merchant, such as a high imitation merchandise, so as to capture the price difference between the genuine merchandise and the counterfeit merchandise.

For businesses with physical stores, their clerk can verify the authenticity of the returned merchandise on site. For online merchants, buyers and sellers are often physically separated and rely on parcels to deliver goods, which makes it impossible to check-in on-site. The inspection reports provided by online merchants, after receiving the returned goods by mail, are often not credible because they are direct interest related parties.

On the other hand, when a buyer places orders online, they cannot predict the authenticity of goods delivered by merchants. If a high imitation counterfeit merchandise is received, it is difficult for the buyer to prove to a third party that the high imitation counterfeit merchandise is indeed from the merchant rather than being replaced, which makes it difficult for buyers to defend their rights even if they are deceived.

For online retailing, the existing method is usually that the package recipient needs to record a video of the entire unpacking process to prove the integrity of the delivered good. This method has obvious flaws and drawbacks. First, the package recipient cannot predict the authenticity of the delivered good. Second, recording video throughout the unpacking process is not the fundamental solution to the problem. Since goods can be forged, packages can also be forged. Third, to record the entire unpacking process requires a lot of manpower and resources. In practice, the method of video recording of the unpacking process will face the problem of too high cost and thus cannot to be scaled up.

### The Content of Invention

An object of the present invention is to provide a method for integrity encryption and verification of a merchandise to solve the problems and deficiencies existing in the prior art.

To meet the above object, the present invention provides a method for encrypting and verifying integrity of a merchandise, the method comprising the following steps:
- a user inputs one or more comprehensive information of the merchandise into a platform, the comprehensive information comprising detail information of the merchandise itself and additional information customized by the user;
- the sender selects one or more comprehensive information of the merchandise or one or more comprehensive information is selected by the platform as preset detail information, wherein the preset detail information is for use by the platform to generate a preset detail sequence;
- the preset detail information and/or the preset detail sequence from the sender is used as a key to encrypt integrity of the merchandise;
- corresponding prompt information is provided to facilitate a receiver to extract details corresponding to the preset detail information;- monitoring, by the platform, the receiving status and/or the received time, and prompting, by the platform, the receiver to perform integrity verification;
- displaying, by the platform, the preset detail information and/or its prompt information to the receiver, and the receiver providing corresponding verification detail information and its sequence to the platform;
- verifying, by the platform and using the verification detail information and/or the verification detail sequence, the integrity of the merchandise from the sender, wherein objects examined by the integrity verification comprise similarity, matching degree, distance;
- determining, by the platform, whether the merchandise integrity verification is passed, based on similarity between the preset detail information and its corresponding verification detail information; and
- determining, by the platform, whether to allow the recipient to enter merchandise return process based on the integrity verification and its result.

Preferably, the comprehensive information of a merchandise refers to feature, unit, item, or combinations thereof that can be distinguished and/or separated from the merchandise itself.

Preferably, component elements of the comprehensive information of a merchandise comprise text, number, symbol, sound, shape, color, line, texture, pattern, style, touch, taste, and smell; wherein among which, sensory information can be descriptive text or file that is digitalized and/or virtualized.

Preferably, the detail information is input into the platform by the user in any of the following forms: picture, video, digital file, and virtual file; whereas the user inputs the detail information into the platform in any of the following ways: taking photo and/or video, scanning, uploading digital and/or virtual file.

Preferably, the method further comprises the following step: the platform providing one or more sets of conversion tools that allow a user to generate and/or convert into other detail information based on the inputted detail information, wherein a conversion tool can produce consistent output results for a same or similar input information, the functions provided by the conversion tools comprising: geometric transformation, function transformation, parameter adjustment, color processing, image fusion, coding, removing information, and adding information.

Preferably, the method further comprises the following steps: the platform using the preset detail information and/or the preset detail sequence as an encryption key for verifying the integrity of a merchandise, and the receiver providing the corresponding detail and/or sequence to the platform to complete the verification process. Preferably, the method further comprises the following step: after receipt of the verification detail information and/or the verification detail sequence from the receiver, the platform comparing and verifying with the preset detail information and/or the preset detail sequence provided by the sender, wherein the objects used for comparison include: similarity, matching degree, and distance; wherein the implementation of the verification process may be required to be finished within a limited time period, a limited number of times, or a combination of the two.

Preferably, the prompt information is used to prompt the recipient to facilitate extraction of details corresponding to the preset detail information for comparison and verification, and the prompt information includes any one or more of the following: a location of a selected detail on the merchandise, manner in which a detail information is selected, parameter information used when a detail is selected, and the parameter information used when a detail information is converted.

Preferably, the method further comprises the following step: monitoring, by the platform, the receiving status and/or received time of the merchandise, by performing the below method: the platform obtains the deliver status and/or received time from a logistics company with a postal order number, the logistics company inputs the deliver status and/or time to the platform, the sender or receiver actively feeds back the deliver status and/or time to the platform, and obtains the deliver status and/or time from the status acquisition process triggered by the receiver's actions on the platform.

Preferably, the platform determines whether the integrity verification is passed according to specific passing criteria which includes: the preset detail information and its corresponding verification detail information have a similarity greater than 85%, a similarity median value of the corresponding preset and verification detail is greater than 80%, and an average similarity value of the corresponding preset and verification detail information is greater than 85%; otherwise, the platform can determine that the product integrity verification fails.

Preferably, the method further comprises the following step: a platform intervention process is triggered when a product integrity verification fails, wherein forms of the platform intervention process include any one or more of the following: performing a second production verification process, investigating a failure reason of the integrity verification, adjudicating whether the recipient is allowed to enter a product return process.

Preferably, the method further comprises the following step: the platform may set that only after a product integrity verification process is completed, a product returning process can be activated and implemented.

Preferably, the preset detail information and/or the preset detail sequence is selected and determined by a platform operation team, a non-manual algorithm and/or mechanism, or a combination of the two.

Preferably, the merchandise integrity verification can be alternatively implemented as removing the preset detail information from the comprehensive information to obtain the residual detail information, and thus the integrity verification is implemented to compare the verification detail provided by the receiver and its corresponding residual detail information; wherein the comparison and verification is implemented by checking the verification detail can match with the corresponding positions of the residual detail, if the matching criteria is satisfied, the product integrity verification passes, otherwise the product integrity verification fails.

The embodiment of the present invention provides a method for encrypting and verifying the integrity of a merchandise. The method comprises the steps that a user inputs one or more comprehensive detail information of the merchandise into a platform. The comprehensive detail information comprises the detail information of the merchandise itself and the additional detail information customized by the user. The sender may selects one or more comprehensive detail information of the merchandise or one or more comprehensive detail information may be selected by the platform as the preset detail information. The preset detail information is used by the platform to generate a preset detail sequence. The preset detail information and/or the preset detail sequence is used as the key to encrypt the integrity of the merchandise, and the corresponding prompt information is provided to facilitate the receiver to extract the details corresponding to the preset detail information.

The platform monitors the receiving status and/or the received time and prompts the receiver to perform the integrity verification.

The platform displays the preset detail information and/or its prompt information to the receiver, and the receiver provides the corresponding verification detail information and its sequence to the platform.

The platform uses the verification detail information and/or the verification detail sequence to verify the integrity of the merchandise from the sender. The objects examined by the integrity verification may be, but are not limited to: the similarity, the matching degree, the distance;

The platform determines whether the merchandise integrity verification is passed based on a similarity between the preset detail information and its corresponding verification detail information.

The platform determines whether to allow the recipient to enter the merchandise return process based on the merchandise integrity verification process and its result.

Further, the comprehensive detail information of a merchandise refers to features, units, items, or combinations thereof that can be distinguished and/or separated from the merchandise itself.

Further, the component elements of the comprehensive detail information of the merchandise include, but are not limited to: text, numbers, symbols, sounds, shapes, colors, lines, textures, patterns, styles, touches, tastes, and smells; among them, the sensory information can be descriptive text or files that are digitalized and/or virtualized.

Further, the forms for inputting the detail information to the platform by a user including but are not limited to: pictures, videos, digital and/or virtual files. The methods for inputting the detail information to the platform by a user comprise: taking photos and/or videos, scanning, uploading digital and/or virtual files.

Further, the platform provides one or more sets of conversion tools that allow a user to generate and/or convert into other detail information based on the inputted detail information. A conversion tool should have consistent output results for the same or similar input information. The functions provided by the conversion tools include but are not limited to: geometric transformation, function transformation, parameter adjustment, color processing, image fusion, coding, removing information, adding information.

Further, the platform uses the preset detail information and/or the preset detail sequence as the encryption key for verifying the integrity of a merchandise, and the receiver needs to provide the corresponding detail and sequence to the platform to complete the verification process.

Further, after the platform receives the verification detail information and/or the verification detail sequence from the receiver, it compares and verifies with the preset detail information and/or the preset detail sequence provided by the sender. The objects used for comparison may be but not limited to: the similarity, the matching degree, and the distance. The implementation of the verification process may be required to be finished within a limited time period, a limited number of times, or a combination of the two.

Further, the said prompt information is used to prompt the recipient to facilitate the extraction of details corresponding to the preset details for comparison and verification, including but not limited to: the location of the selected detail on the merchandise, the manner in which the detail information is selected, the parameter information used when the detail is selected, and the parameter information used when the detail information is converted.

Further, the platform monitors the receiving status and/or the received time of the merchandise, the monitoring methods include but are not limited to: the platform obtains the deliver status and/or time from the logistics company with the postal order number, the logistics company inputs the deliver status and/or time to the platform, the sender or receiver actively feeds back the deliver status and/or time to the platform, and the status and/or received time are obtained from the status acquisition process triggered the receiver's actions on the platform.

Further, the platform determines whether the merchandise integrity verification can be passed, and the specific passing criteria may be, but not limited to: the corresponding preset detail information and verification detail information have a similarity greater than 85%, the similarity median value of the corresponding preset and verification detail is greater than 80%, and the average similarity value of the corresponding preset detail and verification detail information is greater than 85%; otherwise, the platform can determine that the merchandise integrity verification fails.

Further, the platform intervention process is triggered when the merchandise integrity verification failed, and the form of platform intervention includes but is not limited to: performing a second merchandise verification process, investigating the failure reasons of the integrity verification, adjudicating whether the recipient is allowed to enter the merchandise return process.

Further, the platform may set that only after the integrity verification process is passed, the merchandise returning process can be activated and implemented.

Further, the preset detail information and/or the preset detail sequence may be selected and determined by the platform operation team, non-manual algorithms and/or mechanisms, or a combination of the two.

Further, the merchandise integrity verification can alternatively implemented as removing the preset detail information from the complete detail information to obtain the residual detail information, and thus the verification is implemented to compare the verification detail with its corresponding residual detail information. Specifically, the comparison and verification may be implemented by, but is not limited to, checking the verification detail from the recipient can match with the corresponding positions of the residual detail, and if the matching criteria is satisfied, the merchandise integrity verification passes, otherwise the merchandise integrity verification fails.

Compared with the prior art, the beneficial effects of this invention are:
This invention encrypts and verifies the integrity of a merchandise through the merchandise detail information and its sequence. The sender selects the detail information and its sequence in advance as the key for encryption of the merchandise integrity. After the merchandise is received, the receiver provides the corresponding detail information and its sequence according to the platform display and/or prompt. The platform compares and verifies the corresponding two sets of detail information to determine whether the integrity verification for the merchandise is passed.

### Description of the drawings

In order to more clearly illustrate the embodiments or the technical solutions of this invention, the following will briefly introduce the drawings that need to be used in the description of the embodiments or the technical solutions of this invention. Obviously, the drawings in the following description are some embodiments of this invention, and other figures can be obtained based on these drawings without inventive effort.

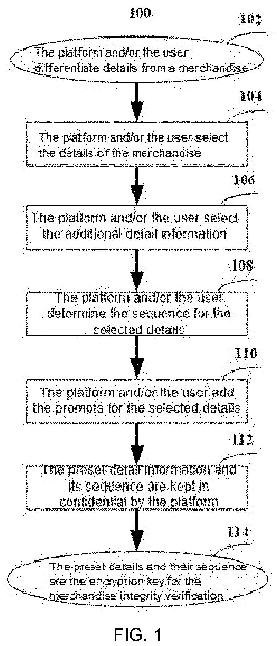

Figure 1 is a schematic diagram of an encryption process for the merchandise integrity in an embodiment of this invention; and

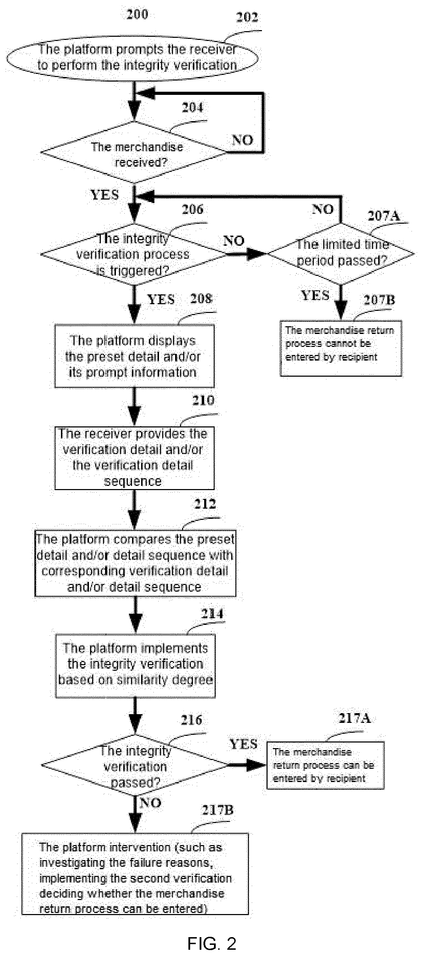

Figure 2 is a schematic diagram of a verification process for the merchandise integrity in an embodiment of this invention.

### Detailed Description of the Invention

In order to make the objects, technical solutions and advantages of the embodiments of this invention more clear, the technical solutions of the embodiments in this invention will be clearly and completely described in connection with the accompanying drawings, and obviously, the described embodiments are part of the embodiments of this invention, not all embodiments. All other embodiments obtained by a person of ordinary skill in the art based on the embodiments of this invention without creative efforts are within the scope of the present invention.

The method for encrypting and verifying the merchandise integrity in an embodiment comprises a user inputting one or more comprehensive merchandise detail information into a platform, wherein the comprehensive merchandise detail information comprises the detail information of the merchandise itself and/or additional detail information customized by the user 102. The sender selects one or more comprehensive merchandise detail information from the platform or one or more comprehensive merchandise detail information selected by the platform as the preset detail information. When the preset detail information is obtained, the platform sorts it and generates the so called a preset detail sequence. The platform uses the preset detail information and/or the preset detail sequence as a key to encrypt the integrity of the merchandise, and sends a prompt message to facilitate the receiver to extract details corresponding to the preset detail information. The detail information of a merchandise refers to features, units, items or combinations thereof that can be distinguished and/or separated from the merchandise itself.

The merchandise as a whole contains rich details and features. These detail information and their constituent elements may be, but are not limited to: text, numbers, symbols, shapes, colors, lines, textures, patterns, styles, styling, tactile, taste, smell, etc. Among them, the sensory information such as the tactile, taste, smell, etc. may be descriptive texts as well as digitized and/or virtualized files. Taking a clothing type merchandise as an example, the detail information and its elements are usually: color, line, shape, style, tactile and so on.

In addition to the detail information of the merchandise itself, a user can also add custom details to the merchandise. These additional details and their constituent elements can be, but are not limited to: text, numbers, symbols, shapes, colors, lines, textures, patterns, styles, styling, tactile, taste, smell, etc. For example, a user may assign some custom symbol, sew a certain color of thread, and paste a certain custom pattern, etc. on the merchandise. We refer to the detail information from a user's customization as the additional detail information.

The forms for users to input the comprehensive merchandise detail information into the platform include, but are not limited to: pictures, videos, digital files and/or virtual files, etc. The platform provides a method for users to input the comprehensive detail information including but not limited to: photographing, camera shooting, scanning, uploading of digital and/or virtual files, and the like.

A user can choose to input one or more detail information of the merchandise into the platform, and the user can also input the detail information of the merchandise together with the additional detail information into the platform. The platform processes and/or filters the obtained detail information, and identifies the selected detail information for the user to further select and/or specify.

When a user inputs detail information into the platform by taking photos and/or videos, the platform provides one or more sets of drawing tools for the detail information selection, which may be, but are not limited to: circles, rectangles, squares, triangles, and the like. For a circle drawing tool, the platform provides options of one or more fixed-sizes and/or user-defined size, for example the options of small, medium, large and custom size are provided.

The platform provides one or more sets of conversion tools, which can allow users to generate and/or convert to other detail information based on the comprehensive detail information. Although the specific functionality provided by these conversion tools are different, they should have the characteristics of output consistency. That is, the output results are consistent or similar for the same or similar input. Otherwise, if a very different output is obtained for the same or similar input, the subsequent verification process cannot be performed. For example, the hash encryption algorithms are not suitable as such a conversion tool, because even there is only one bit different of the input information, the output will be significantly different. The functions provided by the platform conversion tool include but are not limited to: geometric transformation (such as displacement, rotation, etc.), function transformation (such as a sine transform, a cosine transform, a Fourier transform, etc.), parameter adjustment (adjust the parameters such as frequency, phase, and the like), image processing (such as color conversion, brightness and contrast adjustment, color modification, etc.), image fusion (addition, subtraction, combination, and stitching of multiple images), coding (such as compression coding, etc.), removal information (such as removing lines, colors, shapes, etc.), and adding information (such as adding watermarks, logos, colors, etc.).

In this invention, a user comprises a sender or a receiver of a merchandise.
The sender of a merchandise can arbitrarily select one or more detail information from the comprehensive detail information and submits to the platform. The user may only select the detail information of the merchandise itself 104.

To further ensure the uniqueness and unpredictability of the encryption, one or more additional detail information may also be selected and included 106. The method of selecting the comprehensive detail information can be that the user directly inputs one or more detail information to the platform. Or the user may first inputs the merchandise detail information and the additional detail information to the platform, and then selects the detail information after the platform filtering. Or the platform selects and determines the detail information used for the integrity verification.

After the preset detail information is selected and determined, a sorting process is performed 108. The sorting method can be but not limited to: a user-defined sequence, a random sequence decided by the platform, a sequence based on the correlation, i.e. the correlation intensity between the detail information, and the like. The sorted preset detail information is referred as the preset detail sequence in this invention.

Due to the massive amount of merchandise detail information and the unpredictable nature of the additional detail information, a detail sequence generated from them is almost unique and unpredictable. The longer the detail sequence, the more difficult to crack. That is, the preset detail information and the preset detail sequence can be the encryption key for the integrity of the merchandise 114.

After the preset detail information and/or the preset detail sequence are generated, the user and/or the platform may add prompt information 110, which is used to remind the recipient and facilitate the extraction of details corresponding to the preset details for the following comparison and verification process. The prompt information can be, but is not limited to: the location of a selected detail on the merchandise, the manner in which the detail information is selected, and the parameter used when the detail information is selected (e.g. the category, name, size of the drawing tool used), the parameter used when the detail information is converted, etc.

The preset detail sequence and/or its prompt information is the information provided by the sender to encrypt the integrity of the merchandise. After the platform obtains the preset detail sequence and/or its prompt information, it will be processed and stored confidentially 112, to ensure that the recipient or any third party cannot obtain it illegally.

The preset detail information and/or the preset detail sequence can also be selected and determined by the platform. After the platform obtains the merchandise information, for example the merchandise picture or video taken and submitted by the user, the platform can select the preset detail information and/or preset detail sequence. The selection of the preset detail information and/or the preset detail sequence may be determined by the platform operation team, non-manual algorithms and/or mechanisms, or a combination of the two.

Not only a preset sequence, but other relationships based on the selected detail information can also be used to encrypt the integrity for the merchandise. These other relationships can be, but are not limited to: combinations based on selected details (such as stitching, piecing together, superimposing, eliminating, etc.), the reverse verification of selected details (i.e. to verify the merchandise integrity based on the non-selected details not the selected details) and so on.

The platform prompts the recipient to perform integrity verification 202 and monitors whether the recipient receives the goods and/or the time of receipt 204. The method for the platform to obtain the receipt status and/or time of the goods includes, but is not limited to: to obtain the receipt status and/or time from the logistics company by a tracking number, the logistics company inputs the receipt status and/or time to the platform, the sender or receiver actively feedbacks the receipt status and/or time to the platform, and to obtain the receipt status and/or time from a status acquisition process triggered by the receiver's actions (for example, when the receiver enters the extraction code of the delivered good to the platform or the receiver triggers the status set by the platform. After the status acquisition process is triggered, the platform extracts the GPS information and time), etc.

The platform may stipulate that after the receiver receives the goods, the integrity verification process 206 needs to be triggered within a limited time period. After the limited time period expires, the receiver cannot enter to the merchandise returning process 207B. If the limited time period is not exceeded 207A, the integrity verification process will continue. For example, within 3 hours after the merchandise was received, the receiver should trigger the integrity verification process. After the integrity verification process is triggered, the platform displays the corresponding detail information and/or its prompt information according to the sender's preset detail information and the preset sequence to the receiver 208. The receiver finds the corresponding detail information on the received merchandise according to the detail information and/or prompt information displayed by the platform, and enters into the platform 210. The platform saves the detail information provided by the recipient in order. The detail and sequence information provided from the receiver side are referred as the verification detail and the verification sequence, respectively.

The merchandise integrity verification refers to compare and verify the verification detail information and/or verification detail sequence with the preset detail information and/or the preset detail sequence. The object examined by the comparison and verification can be, but not limited to: similarity, degree of matching (such as pixel matching), a distance (such as a distance after transformation to the Euclidean geometric space), etc. The platform to detect whether the corresponding detail sets from the receiver and the sender can be matched for verifying the integrity of the merchandise 212. Specifically, the platform groups a preset detail with its corresponding verification detail according to the preset sequence and the verification sequence, to compare and measure their similarity, and thus to verify whether they are consistent.

The merchandise integrity verification can also remove the preset detail information from the complete detail information of a merchandise to obtain the residual detail information. The merchandise integrity verification can be implemented by comparing and verifying the verification detail with and the residual detail information. Specifically, the comparison and verification methods include, but are not limited to, whether a verification detail information can match with the pixels, lines, colors, etc. in the corresponding positions of its corresponding residual detail. If the matching criteria can be satisfied, its integrity verification passes, otherwise its integrity verification fails.

After the platform displays a preset detail and/or its prompt information, it can set time-limited entry, number-limited entry, and time-number limited entry. For example, after the platform displays and/or prompts a preset detail or a preset detail sequence, the limited time period can be set as 5 minutes for the receiver to input the corresponding verification detail and/or the corresponding verification detail sequence to the platform, otherwise it will be considered as a fail. Similarly, the platform can limit the number of times the receiver can input maximum five times. Similarly, the platform can limit the receiver to have five opportunities to input the verification detail and/or the verification sequence within 5 minutes.

The platform can compare and verify each group of corresponding detail one by one with the inputting process of the verification detail, and generate the similarity degree. The platform can also provide the similarity degree of the overall and/or each individual groups of corresponding details after all the verification details are inputted. The objects examined by the platform comparison and verification can be, but are not limited to: similarity, matching degree (e.g. the matching degree of pixels), distance (e.g. the distance to Euclidean geometric space), and the like.

The platform can determine whether the merchandise integrity verification is passed based on the similarity between the preset detail information and the verification detail information 214. The judgment condition 216 for the merchandise integrity verification may be, but not limited to: each set of corresponding preset details and verification details has a similarity greater than a certain value such as 85%, the similarity of each set of corresponding preset additional detail information and verification additional detail information is greater than a certain value such as 90%, and the similarity of other corresponding details is greater than a certain value such as 80%, the median similarity value is greater than a certain value such as 80%, the average similarity is greater than a certain value such as 85%, and the like. After the verification process is passed, the merchandise return process can be activated and the receiver can choose to enter the merchandise return process 217A, otherwise the platform can determine that the merchandise integrity verification is failed.

If the merchandise integrity verification is failed, a platform intervention process 217B is triggered. The forms of platform intervention includes but is not limited to: performing a secondary integrity verification process, investigating the reasons for the failure of the recipient's integrity verification, and adjudicating whether the recipient is allowed to enter the merchandise return process, etc.

The reasons for the failure of the merchandise integrity verification can be, but are not limited to: system misjudgment, the receiver did not correctly select the corresponding details (such as the location and size of the selected verification details are incorrect), the preset prompt information is wrong, the additional detail information is inconsistent, true mismatch (the location, size, etc. of all verification details are correctly selected), etc.

After the merchandise integrity is verified, it can prove that whether or not the merchandise is really from the sender, and the platform can also obtain the detail information provided by the receiver. If the receiver chooses to return the merchandise, after the returned merchandise is received, the platform can also verify if the returned merchandise really from the receiver according to the detailed information provided by the receiver previously. With the merchandise integrity verification, the platform can easily trace the behavior of sending counterfeit goods, whether it is from the sender or the receiver, so that traceability of counterfeit goods by the platform becomes easier and more reliable.

According to the result of the integrity verification, the follow-up process may be, but not limited to: whether a merchandise return is allowed, whether a refund process is allowed, whether to reward or punish, etc. Specifically, the merchandise return process is activated only after the integrity verification is passed, otherwise the platform does not accept the return option.

Finally, it should be noted that the above embodiments are only used to illustrate the technical solutions of this invention and are not limiting thereof. While the invention has been described in detail with reference to the foregoing embodiments, it will be understood by those of ordinary skill in the art that modifications may be made to the technical solutions set forth in the foregoing embodiments, or equivalents thereof may be substituted for some or all of the technical features thereof; however, such modifications or substitutions do not depart from the scope of the various embodiments of the invention.

## Claims

1. A method for encrypting and verifying integrity of a merchandise, the method comprising the steps of:
- a user inputs one or more comprehensive information of the merchandise into a platform, the comprehensive information comprising detail information of the merchandise itself and additional information customized by the user;
- the sender selects one or more comprehensive information of the merchandise or one or more comprehensive information is selected by the platform as preset detail information, wherein the preset detail information is for use by the platform to generate a preset detail sequence;
- the preset detail information and/or the preset detail sequence from the sender is used as a key to encrypt integrity of the merchandise;
- corresponding prompt information is provided to facilitate a receiver to extract details corresponding to the preset detail information;
- monitoring, by the platform, the receiving status and/or the received time, and prompting, by the platform, the receiver to perform integrity verification;
- displaying, by the platform, the preset detail information and/or its prompt information to the receiver, and the receiver providing corresponding verification detail information and its sequence to the platform;
- verifying, by the platform and using the verification detail information and/or the verification detail sequence, the integrity of the merchandise from the sender, wherein objects examined by the integrity verification comprise similarity, matching degree, distance;
- determining, by the platform, whether the merchandise integrity verification is passed, based on similarity between the preset detail information and its corresponding verification detail information; and
- determining, by the platform, whether to allow the recipient to enter merchandise return process based on the integrity verification and its result.

2. The method of claim 1, wherein the comprehensive information of a merchandise refers to feature, unit, item, or combinations thereof that can be distinguished and/or separated from the merchandise itself.

3. The method of claim 1 or 2, wherein component elements of the comprehensive information of a merchandise comprise text, number, symbol, sound, shape, color, line, texture, pattern, style, touch, taste, and smell; wherein among which, sensory information can be descriptive text or file that is digitalized and/or virtualized.

4. The method of any one of claims 1-3, wherein the detail information is input into the platform by the user in any of the following forms: picture, video, digital file, and virtual file; and wherein the user inputs the detail information into the platform in any of the following ways: taking photo and/or video, scanning, uploading digital and/or virtual file.

5. The method in claim 1, further comprising: the platform providing one or more sets of conversion tools that allow a user to generate and/or convert into other detail information based on the inputted detail information, wherein a conversion tool can produce consistent output results for a same or similar input information, the functions provided by the conversion tools comprising: geometric transformation, function transformation, parameter adjustment, color processing, image fusion, coding, removing information, and adding information.

6. The method in claim 1, further comprising: the platform using the preset detail information and/or the preset detail sequence as an encryption key for verifying the integrity of a merchandise, and the receiver providing the corresponding detail and/or sequence to the platform to complete the verification process.

7. The method of any one of claims 1 to 6, further comprising: after receipt of the verification detail information and/or the verification detail sequence from the receiver, the platform comparing and verifying with the preset detail information and/or the preset detail sequence provided by the sender, wherein the objects used for comparison include: similarity, matching degree, and distance; wherein the implementation of the verification process may be required to be finished within a limited time period, a limited number of times, or a combination of the two.

8. The method of claim 1, wherein the prompt information is used to prompt the recipient to facilitate extraction of details corresponding to the preset detail information for comparison and verification, and the prompt information includes any one or more of the following: a location of a selected detail on the merchandise, manner in which a detail information is selected, parameter information used when a detail is selected, and the parameter information used when a detail information is converted.

9. The method of claim 1, further comprising: monitoring, by the platform, the receiving status and/or the received time of the merchandise, by performing the below method: the platform obtains the deliver status and/or received time from a logistics company with a postal order number, the logistics company inputs the deliver status and/or time to the platform, the sender or receiver actively feeds back the deliver status and/or time to the platform, and obtains the deliver status and/or time from the status acquisition process triggered by the receiver's actions on the platform.

10. The method of claim 1, wherein the platform determines whether the integrity verification is passed according to specific passing criteria which includes any one of the following: the preset detail information and its corresponding verification detail information have a similarity greater than 85%, a similarity median value of the corresponding preset and verification detail is greater than 80%, and an average similarity value of the corresponding preset and verification detail information is greater than 85%; otherwise, the platform can determine that the product integrity verification fails.

11. The method of any one of claim 1 to 10, further comprising: a platform intervention process is triggered when a product integrity verification fails, wherein forms of the platform intervention process include any one or more of the following: performing a second production verification process, investigating a failure reason of the integrity verification, adjudicating whether the recipient is allowed to enter a product return process.

12. The method of claim 1, further comprising: the platform prescribes that only after a product integrity verification process is completed, a product returning process can be activated and implemented.

13. The method of claim 1, wherein the preset detail information and/or the preset detail sequence is selected and determined by a platform operation team, a non-manual algorithm and/or mechanism, or a combination of the two.

14. The method of claim 1, wherein the merchandise integrity verification can be alternatively implemented as removing the preset detail information from the comprehensive information to obtain a residual detail information, and thus the integrity verification is implemented to compare the verification detail provided by the receiver and its corresponding residual detail information; wherein the comparison and verification is implemented by checking whether the verification detail can match with the corresponding positions of the residual detail, and if the matching criteria is satisfied, the product integrity verification passes, otherwise the product integrity verification fails.
